# EUROPEAN PATENT APPLICATION

(11) **EP 1 197 832 A2**
(43) Date of publication of application: **17.04.2002**
(21) Application number: 01123467.1
(22) Date of filing: 28.09.2001
(51) Int. Cl.: G06F 1/16

(54) **Electronic device provided with an input means**

(30) Priority: 02.10.2000 JP 2000301761; 12.12.2000 JP 2000376847
(71) Applicant: SHARP KABUSHIKI KAISHA, Osaka 545-8522 (JP)
(72) Inventor: Santoh, Yoshihisa, Kizu-cho, Souraku-gun, Kyoto (JP); Nagai, Katsuharu, Sakyo, Nara-shi, Nara (JP); Nakagawa, Hirohide, Sakurai-shi, Nara (JP); Yoshimura, Akira, Nara-shi, Nara (JP); Chijiwa, Hideaki, Nara-shi, Nara (JP); Konishi, Masayuki, Nara-shi, Nara (JP)
(74) Representative: Müller . Hoffmann & Partner Patentanwälte

(57) **Abstract**

In an electronic device, its main unit has a data processing function and has a first and a second input means. The first input means is coupled to the main unit so as to be movable relative thereto between a first position in which the first input means overlaps with the main unit and a second position in which the first input means protrudes from the main unit. The first input means permits input operation in both of the first and second positions. The second input means is arranged in the main unit so as not to be movable relative thereto. The second input means is hidden by the first input means when the first input means is in the first position, and is exposed when the first input means is in the second position. The second input means permits input operation when it is exposed. The first input means is interchangeable with a third input means.

## Description

### BACKGROUND OF THE INVENTION

### Field of the Invention

The present invention relates to an electronic device provided with an input means, and in particular to a portable electronic device provided with a data processing function.

### Description of the Prior Art

In portable electronic devices provided with a data processing function, such as portable personal computers, palm-top personal digital assistants, and mobile communications devices, there is a tradeoff between the compactness and lightness of the device and easy input (data entry). That is, for portability, it is desirable to make a device as compact and light as possible, but, as the device is made more compact, the area that can be allocated to its input operation portion becomes smaller, forcing the user into awkward input operation in a narrow input operation portion.

One way to compensate for a narrow input operation portion is pen-touch-based input. This is widely used in portable digital assistants, and involves writing characters and figures on a tablet board (a liquid crystal display screen is often used also as a tablet board) by hand by using an input pen (stylus) that comes along with the device. The contents so written are recognized as data by the electronic device, which then performs necessary processing thereon. Alternatively, an array of virtual keys is displayed on the liquid crystal display screen (hereinafter, such display of an array of virtual keys will be referred to as a "software keyboard") to permit the user to perform input operation by touching the software keyboard with the input pen.

Pen-touch-based input as described above makes entry of various types of data possible in a narrow input operation portion. However, for users who are accustomed to input using a keyboard with real keys that can be pressed with fingers (hereinafter, such a keyboard will be referred to as a "hardware keyboard"), pen-touch-based input using a software keyboard is slow and frustrating. For this reason, nowadays, even for portable digital assistants adopting pen-touch-based input, hardware keyboards that can be connected to them via a cable are often offered as options.

Irrespective of whether to rely on a hardware keyboard or pen-touch-based input, various input devices have been proposed to make entry of various and diverse types of data possible in electronic devices. For example, Japanese Utility Model Application Published No. H7-21016 discloses a remote control device as described below. In this remote control device, a keyboard portion, having a number of key tops, is provided in a body, and a mode switching plate is openably fitted to the body. When the mode switching plate is opened, the keyboard portion appears, permitting input operation using this keyboard portion. When the mode switching plate is closed, the keyboard portion is hidden, but, by pressing key tops held on the mode switching plate, the applied pressure is transmitted to the key tops of the keyboard portion located below, permitting input operation. In this state, however, since the mode switching plate has been moved from the open position to the closed position, and thereby the input mode has been switched, different types of data are entered. The key tops held on the mode switching plate are shaped differently from those of the keyboard portion so that the user readily knows that they are for entry of different types of data.

Japanese Utility Model Application Laid-Open No. H5-40926 discloses an input device as described below. Here, a keyboard having key tops arranged thereon is combined with an input tablet. The input tablet can be moved between a position beneath the keyboard and a position drawn out from beneath the keyboard. In the position beneath the keyboard, the input tablet operates in a virtual keyboard input mode. The keyboard has no key contacts but only key tops, and, when these key tops are pressed, the corresponding keys on a virtual keyboard located beneath are pressed, permitting input operation. In the position drawn out from beneath the keyboard, the input tablet operates in a pen input mode, permitting pen-based input operation. That is, here, a single input tablet is used both as a means for keyboard-based input and as a means for pen-based input.

Japanese Patent Application Laid-Open No. H5-313799 discloses a lap top computer having a keyboard of which the body has a housing formed therein so that a sliding keyboard is extractably housed in the housing for the purpose of increasing the total number of keys substantially. As needs arise, the user draws out the sliding keyboard and performs input operation by using the keys arranged on the sliding keyboard.

Japanese Patent Registered No. 2570616 discloses a personal computer of which the body is provided with a keyboard portion and has a housing for a tablet formed therein so that a tablet is extractably housed in the housing.

Japanese Patent Application Laid-Open No. H9-247252 discloses a mobile communications device having a keyboard portion provided with a sliding cover so that the keyboard portion is exposed only when it is used, though not for the purpose of expanding the variety of input modes.

In this way, many improvements have been proposed and practiced for the purpose of expanding the variety of input modes, but none can be said to be satisfactory from the viewpoint of providing sufficient input functions for compact electronic devices such as are used on the user's palm.

### SUMMARY OF THE INVENTION

An object of the present invention is to provide a compact electronic device provided with a data processing function and provided with an input means that provides the electronic device with sufficient input functions.

Another object of the present invention is to provide a user-friendly input means.

To achieve the above objects, according to the present invention, an electronic device adopts a construction as described below. A first input means and a second input means are arranged in a main unit of the electronic device. The first input means is coupled to the main unit so as to be movable relative thereto between a first position in which the first input means overlaps with the main unit and a second position in which the first input means protrudes from the main unit. The first input means permits input operation in both of the first and second positions. The second input means is arranged in the main unit so as not to be movable relative thereto in such a way that the second input means is hidden by the first input means when the first input means is in the first position and the second input means is exposed when the first input means is in the second position. The second input means permits input operation when the second input means is exposed. The first input means is interchangeable with a third input means. In this construction, it is possible to use the first, second, and third input means suitably according to circumstances to input various and diverse types of data.

In one arrangement, the first input means slides between the first and second positions. This enhances user-friendliness. Moreover, the first input means is assigned comparatively frequently used input functions, whereas the second input means is assigned comparatively infrequently used input functions. This permits the user to perform most input operation by using the first input means. That is, the user needs to expose the second input means only when he or she really needs it, and thus does not need to slide the first input means frequently.

In another arrangement, exchange of signals between the first input means and the main unit is achieved through non-contact communication therebetween. This makes it easy to detach the first input means and replace it with the third input means.

In still another arrangement, exchange of signals between the first input means and the main unit is achieved through physical contact therebetween. This ensures easy and secure establishment of connection between the first input means and the main unit, and makes it easy to detach the first input means and replace it with the third input means.

In a further arrangement, the main unit is further provided with a checking means for checking whether the first input means is in the first or second position so as to switch the operation mode of the second input means according to the checking result of the checking means. This makes it possible to avoid erroneous recognition of input to the second input means in situations in which input to the second input means is impossible.

### BRIEF DESCRIPTION OF THE DRAWINGS

This and other objects and features of the present invention will become clear from the following description, taken in conjunction with the preferred embodiments with reference to the accompanying drawings in which:
Fig. 1 is a functional block diagram of an electronic device embodying the invention;
Fig. 2 is an external perspective view of the electronic device of a first embodiment of the invention;
Fig. 3 is an external perspective view of the electronic device of the first embodiment, when it is in a different state;
Fig. 4 is a partial sectional view taken along line A-A shown in Fig. 2;
Fig. 5 is an external perspective view of the electronic device of a second embodiment of the invention;
Fig. 6 is an external perspective view of the electronic device of the second embodiment, when it is in a different state;
Fig. 7 is an external perspective view of the electronic device of a third embodiment of the invention;
Fig. 8 is an external perspective view of the electronic device of the third embodiment, when it is in a different state;
Fig. 9 is an external perspective view of the electronic device of a fourth embodiment of the invention;
Fig. 10 is an external perspective view of the electronic device of the fourth embodiment, when it is in a different state;
Fig. 11 is an external perspective view of the electronic device of the fourth embodiment, when it is in a further different state;
Fig. 12 is a side view of a relevant portion corresponding to Fig. 9;
Fig. 13 is a side view of a relevant portion corresponding to Fig. 10;
Fig. 14 is a side view of a relevant portion corresponding to Fig. 11;
Fig. 15 is an external perspective view of the electronic device of a fifth embodiment of the invention;
Fig. 16 is an external perspective view of the electronic device of the fifth embodiment, when it is in a different state;
Fig. 17 is an external perspective view of the electronic device of a sixth embodiment of the invention;
Fig. 18 is an external perspective view of the electronic device of the sixth embodiment, when it is in a different state;
Fig. 19 is a partial sectional view taken along line B-B shown in Fig. 17;
Fig. 20 is a partial sectional view taken along line C-C shown in Fig. 18;
Fig. 21 is an external perspective view of the electronic device of a seventh embodiment of the invention;
Fig. 22 is a partial sectional view of the electronic device of the seventh embodiment, illustrating how the first input means is attached and detached;
Fig. 23 is an external perspective view of the electronic device of an eighth embodiment of the invention;
Fig. 24 is an external perspective view of the electronic device of the eighth embodiment, when it is in a different state;
Fig. 25 is a partial sectional view taken along line D-D shown in Fig. 23;
Fig. 26 is a partial sectional view taken along line E-E shown in Fig. 24;
Fig. 27 is a partial sectional view of the electronic device of a ninth embodiment of the invention;
Fig. 28 is an external perspective view of the electronic device of a tenth embodiment of the invention;
Fig. 29 is an external perspective view of the electronic device of the tenth embodiment, when it is in a different state;
Fig. 30 is an external perspective view of the electronic device of an eleventh embodiment of the invention;
Fig. 31 is an external perspective view of the electronic device of the eleventh embodiment, when it is in a different state;
Fig. 32 is an external perspective view of the electronic device of a twelfth embodiment of the invention;
Fig. 33 is an external perspective view of the electronic device of the twelfth embodiment, when it is in a different state;
Fig. 34 is a front view of the electronic device of a thirteenth embodiment of the invention;
Fig. 35 is a front view of the electronic device of the thirteenth embodiment, when it is in a different state;
Fig. 36 is a sectional view taken along line F-F shown in Fig. 34;
Fig. 37 is a sectional view taken along line G-G shown in Fig. 35;
Fig. 38 is an enlarged view of the portion J shown in Fig. 34;
Fig. 39 is an enlarged view of the portion K shown in Fig. 35;
Fig. 40 is a flow chart of the input control performed in the electronic device of the thirteenth embodiment;
Fig. 41 is a front view of the electronic device of a fourteenth embodiment of the invention; and
Fig. 42 is a sectional view taken along line H-H shown in Fig. 41.

### DESCRIPTION OF THE PREFERRED EMBODIMENTS

Hereinafter, electronic devices embodying the present invention will be described with reference to the drawings. It is to be understood that, although all the embodiments described below deal with compact personal digital assistants as electronic devices, the present invention is applicable not only to this type of electronic devices but also to electronic devices of any other type, for example, personal computers, handy terminals, and mobile communications devices to name a few.

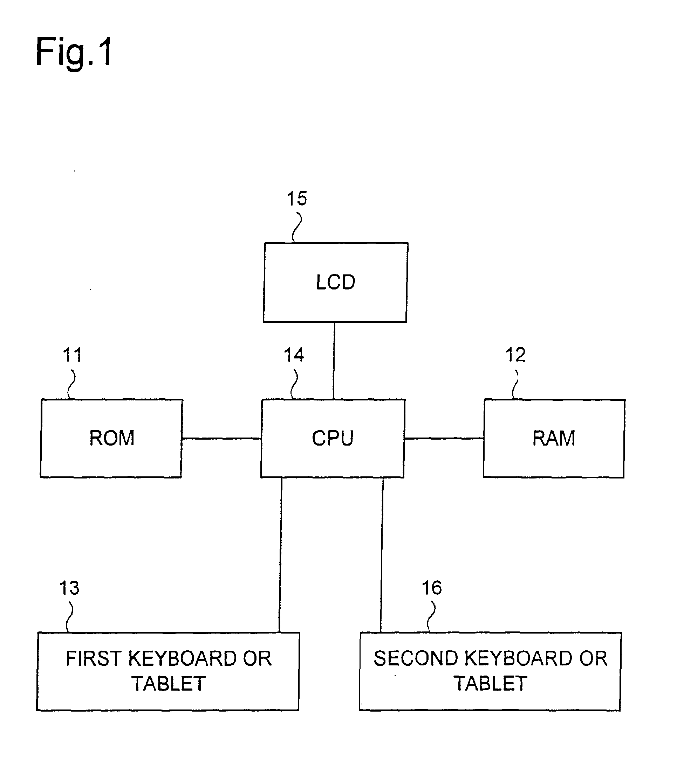

Fig. 1 is a functional block diagram of an electronic device embodying the invention. In this figure, reference numeral 11 represents a ROM that is used mainly to store software programs, reference numeral 12 represents a RAM that is used to store data, reference numeral 14 represents a central processing unit that runs programs and processes data, reference numeral 15 represents a liquid crystal display portion that displays the results of the processing performed by the central processing unit 14, reference numeral 16 represents a second input means. These are the functional blocks that together constitute the main unit of the electronic device (hereinafter also referred to simply as the "main unit"). Reference numeral 13 represents a first input means. The actual component of the first input means 13 (as will often be encountered later, the actual component corresponding to a given functional block, be it the first input means or any other functional block, will be identified with a different reference numeral from the functional block itself) is coupled to the main unit so as to be movable relative thereto, and exchange of signals between this component and the main unit is achieved through non-contact communication or through physical contact. The actual component of the second input means 16 is arranged in the main unit so as not to be movable relative thereto. In addition to the components mentioned thus far, the main unit is provided with, as actual components, a liquid crystal display portion that is shared as a tablet for pen-based input, an electronic circuit board for overall control, a battery serving as a power source, and other components. The first input means may be supplied with electric power from the battery provided within the main unit, or from a battery incorporated in the first input means.

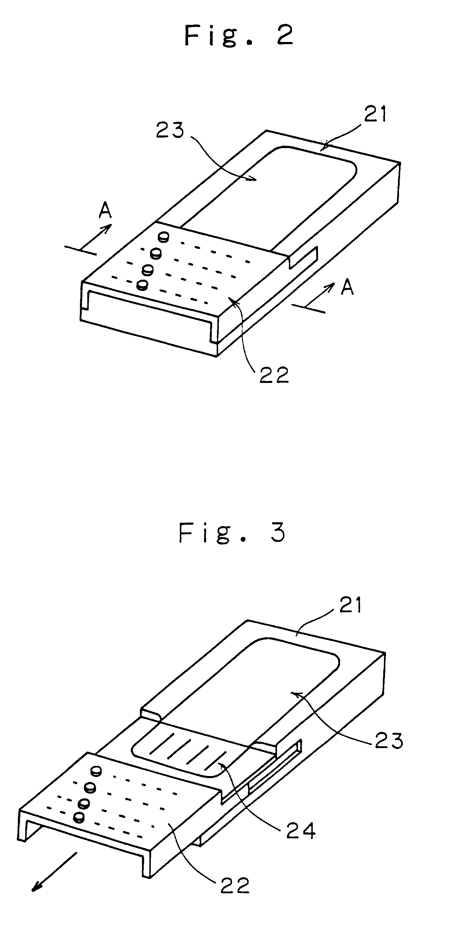

Figs. 2 to 4 show a practical construction of the electronic device of a first embodiment of the invention. Reference numeral 21 represents the main unit of the electronic device, reference numeral 22 represents a sliding keyboard serving as the first input means, and reference numeral 23 represents a liquid crystal display portion. The liquid crystal display portion 23 is fitted with a touch panel to permit pen-touch-based input. The sliding keyboard 22 is slidably fitted to the main unit 21 in such a way that, when it is pushed fully in as shown in Fig. 2, it overlaps with the portion of the main unit 21 other than where the liquid crystal display portion 23 is arranged and, when it is pulled out forward as shown in Fig. 3, it protrudes from the main body 21. The position of the sliding keyboard 22 in the state shown in Fig. 2 will be called its first position, and its position in the state shown in Fig. 3 will be called its second position. When the sliding keyboard 22 is moved from the first position to the second position, the second input means, which has thus far been hidden by the sliding keyboard 22, appears. The second input means is realized with a tablet board 24.

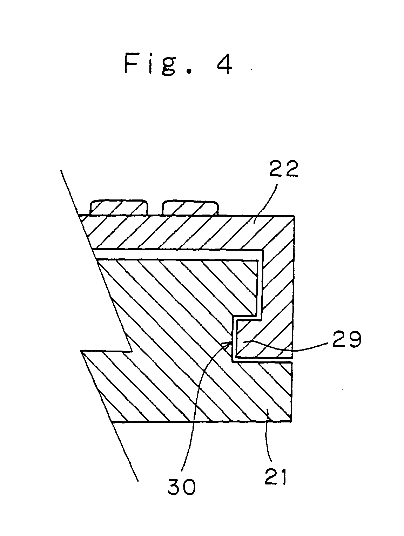

Fig. 4 shows the coupling structure between the main unit 21 and the sliding keyboard 22. The sliding keyboard 22 has a C-shaped section so as to hold the main unit 21 from both side surfaces thereof. The sliding keyboard 22 has, on the inner surfaces of its downward extending side wall portions, projections 29 formed so as to engage with grooves 30 formed in the main unit 21. This permits the sliding keyboard 22 to be slidably coupled to the main unit 21. The coupling structure between the main unit 21 and the sliding keyboard 22 is not limited to this specific structure, but may be of any other type as long as it slidably and detachably couples them together.

With the sliding keyboard 22 placed in the first position, the user of the electronic device can enter data by pressing the keys with fingers while viewing the liquid crystal display portion 23. Alternatively, with the sliding keyboard 22 pulled out forward to the second position, the user can enter data by touching the tablet board 24 with a pen. Moreover, the user can also enter data by touching the touch panel of the liquid crystal display portion 23 with the pen. In this way, according to the operation environment, such as whether the user is operating the electronic device indoors or outdoors, and according to the input skill of the user, such as whether he or she is accustomed to typing-based input using a keyboard, the user of the electronic device can use the sliding keyboard 22, the tablet board 24, and the touch panel of the liquid crystal display portion 23 suitably to enter characters or perform input operation by selecting the icons or the keys of the software keyboard displayed on the liquid crystal display portion 23.

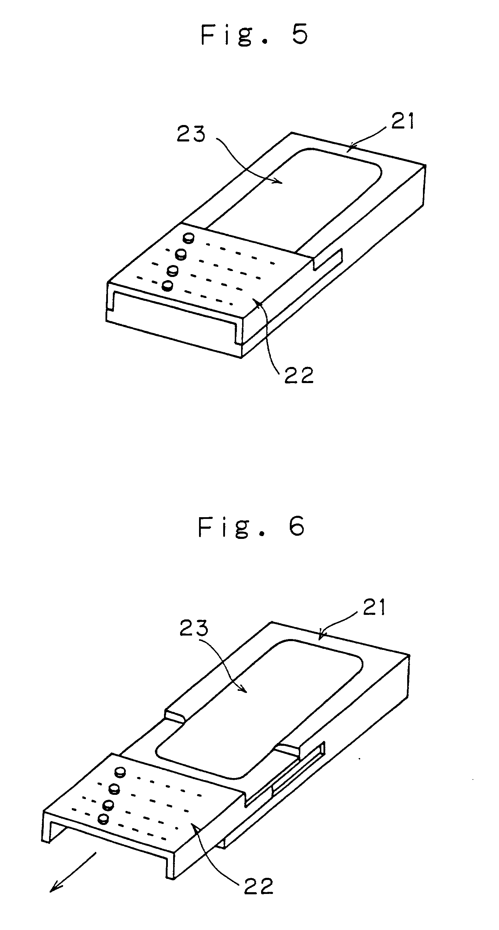

Figs. 5 and 6 show a practical construction of the electronic device of a second embodiment of the invention. Here, as in the first embodiment, the electronic device has a main unit 21, a sliding keyboard 22 serving as the first input means, and a liquid crystal display portion 23. The liquid crystal display portion 23 is fitted with a touch panel to permit pen-touch-based input. As in the first embodiment, the sliding keyboard 22 is in a first position when pushed fully in as shown in Fig. 5 and in a second position when pulled out forward as shown in Fig. 6. The difference from the first embodiment is that the liquid crystal display portion 23 is larger and extends to reach beneath the liquid crystal display portion 23 in its first position.

When the sliding keyboard 22 is in the first position, the sliding keyboard 22 hides part of the liquid crystal display portion 23, making it impossible to use all the functions of the touch panel. When the sliding keyboard 22 is placed in the second position, the entire liquid crystal display portion 23 appears, making it possible to use all the functions of the touch panel. In this second embodiment, that part of the liquid crystal display portion 23 which has been hidden by the sliding keyboard 22 serves as the second input means.

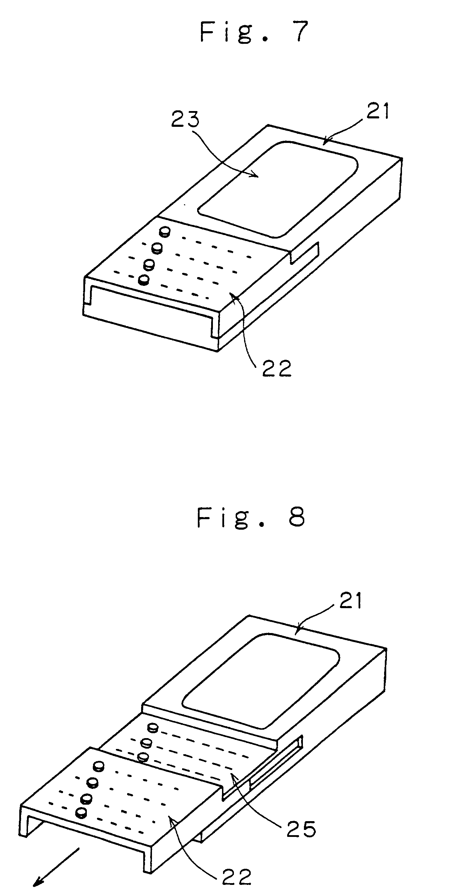

Figs. 7 and 8 show a practical construction of the electronic device of a third embodiment of the invention. Here, as in the first embodiment, the electronic device has a main unit 21, a sliding keyboard 22 serving as the first input means, and a liquid crystal display portion 23. The liquid crystal display portion 23 is fitted with a touch panel to permit pen-touch-based input. As in the first embodiment, the sliding keyboard 22 is in a first position when pushed fully in as shown in Fig. 7 and in a second position when pulled out forward as shown in Fig. 8. The difference from the first embodiment is that the second input means, which appears when the sliding keyboard 22 is placed in the second position, is not a tablet board but a stationary keyboard 25.

With the sliding keyboard 22 placed in the first position, the user of the electronic device can enter data by pressing the keys with fingers while viewing the liquid crystal display portion 23. Alternatively, with the sliding keyboard 22 placed in the second position so that the stationary keyboard 25 is exposed, the user can enter data by using also the stationary keyboard 25. Comparatively frequently used keys are gathered on the sliding keyboard 22, and comparatively infrequently used keys are gathered on the stationary keyboard 25. Thus, the user usually performs input operation by using only the sliding keyboard 22 with the sliding keyboard 22 placed in the first position, and, when the user wants to use all the keys available, he or she places the sliding keyboard 22 in the second position and performs input operation by using also the stationary keyboard 25. In this way, the stationary keyboard 25 can be exposed only when it is really needed, and thus there is no need to slide the sliding keyboard 22 frequently.

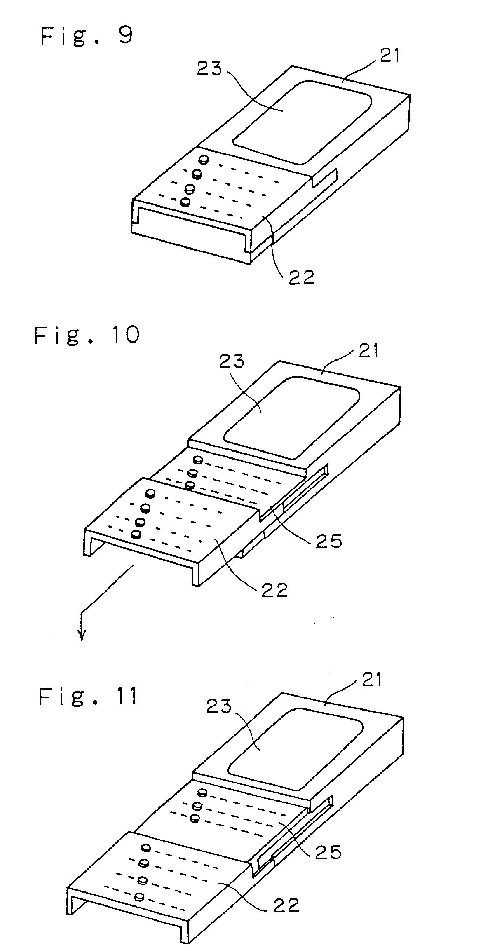

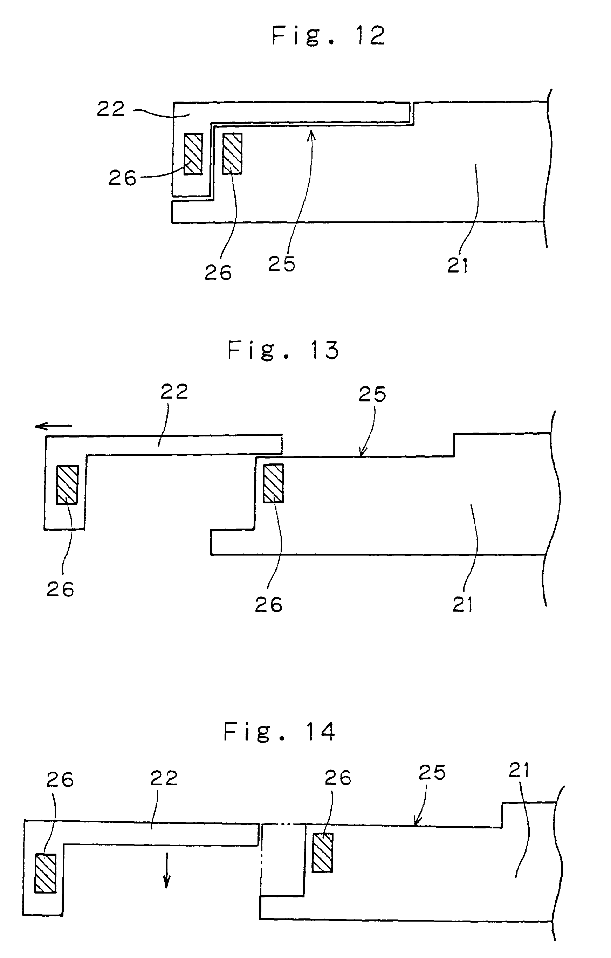

Figs. 9 to 14 show a practical construction of the electronic device of a fourth embodiment of the invention. Here, as in the third embodiment, the electronic device is provided with a main unit 21, a sliding keyboard 22 serving as the first input means, a liquid crystal display portion 23 fitted with a touch panel, and a stationary keyboard 25 serving as the second input means. The difference from the third embodiment is that the sliding keyboard 22 slides over a longer distance so that, as shown in Figs. 11 and 14, the sliding keyboard 22 can be pulled completely out of the main unit 21 and placed contiguously in front of the stationary keyboard 25.

When the sliding keyboard 22 is placed in the state shown in Fig. 11 or 14, the operation surface of the sliding keyboard 22 is flush with the operation surface of the stationary keyboard 25. Thus, the sliding keyboard 22 and the stationary keyboard 25 together form a flat keyboard, permitting the user to perform input operation comfortably.

In this way, in the first, second, third, and fourth embodiments, when the sliding keyboard 22 serving as the first input means is slid forward, the second input means (the tablet board, the touch panel of the liquid crystal display portion, or the stationary keyboard), which is arranged so as not to be movable relative to the main unit 21, is exposed and is thereby brought into a usable state. This makes entry of various and diverse types of data possible while keeping the electronic device compact, and also permits the user the choice of one of the input means available that best suits a given purpose. Moreover, these arrangements create extra space for the layout of the keys and thereby make it possible to design a user-friendly input device.

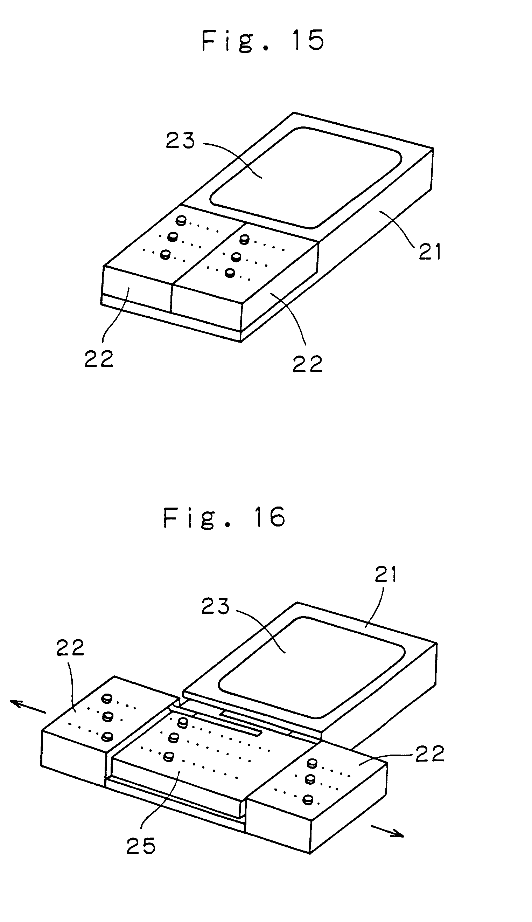

Figs. 15 and 16 show a practical construction of the electronic device of a fifth embodiment of the invention. Here, as in the third embodiment, the electronic device is provided with a main unit 21, a sliding keyboard 22 serving as the first input means, a liquid crystal display portion 23 fitted with a touch panel, and a stationary keyboard 25 serving as the second input means. The difference from the third embodiment is that the sliding keyboard 22 is split at the center into a left and a right portion so that, when these left and right portions are slid respectively leftward and rightward, the stationary keyboard 25 is exposed.

When the sliding keyboard 22 is placed in the state shown in Fig. 16, the sliding keyboard 22 and the stationary keyboard 25 together form a laterally elongate keyboard. This not only makes typing on the keyboard easier, but also enhances flexibility in the layout of the keys on the keyboard.

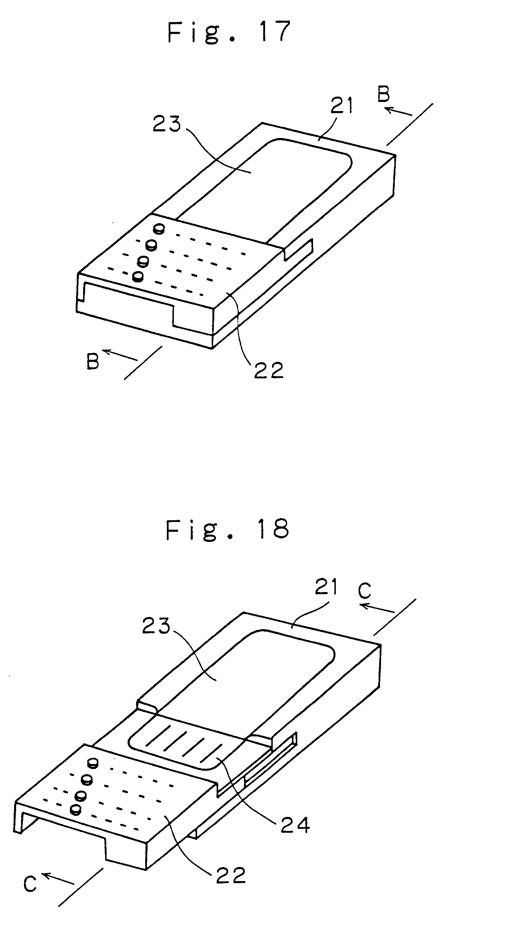

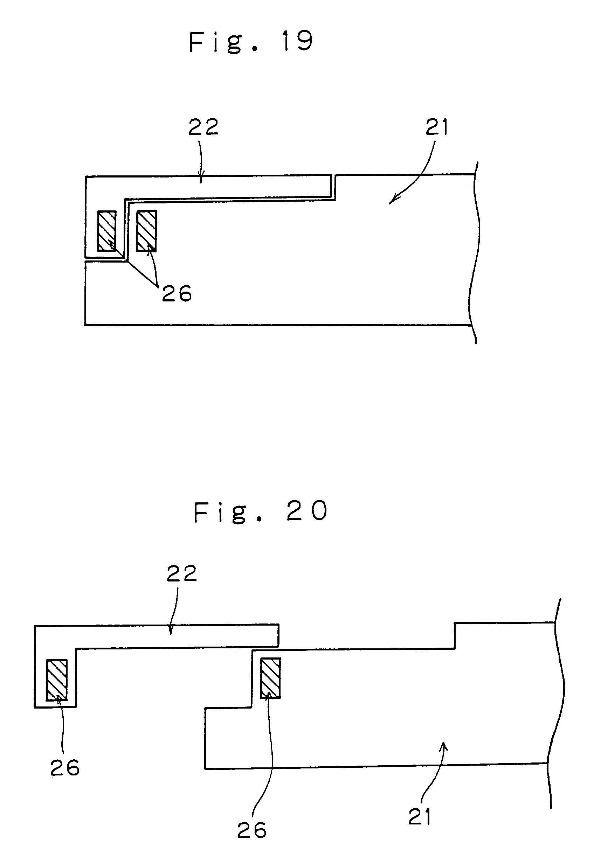

Figs. 17 to 20 show a practical construction of the electronic device of a sixth embodiment of the invention. Here, as in the first embodiment, the electronic device is provided with a main unit 21, a sliding keyboard 22 serving as the first input means, a liquid crystal display portion 23 fitted with a touch panel, and a tablet board 24 serving as the second input means. The sliding keyboard 22 slides forward. In this embodiment, exchange of signals between the sliding keyboard 22 and the main unit 21 is achieved through non-contact communication. Here, to achieve non-contact communication, infrared communication units 26 are used. As shown in Figs. 19 and 20, the sliding keyboard 22 and the main unit 21 are each provided with a infrared communication unit 26 in such a way that the infrared communication unit 26 provided in the former faces the one provided in the latter. The data entered on the sliding keyboard 22 is transmitted through the infrared communication units 26 to the main unit 21, which then processes the data. It is to be understood that Figs. 19 and 20 show only one example of the positions in which the infrared communication units 26 are fitted; that is, they may be fitted in any other positions as long as they can exchange signals. Moreover, the means of communication is not limited to light such as infrared rays; that is, it is also possible to use communication units that exploit an electromagnetic wave outside the wavelength range of light.

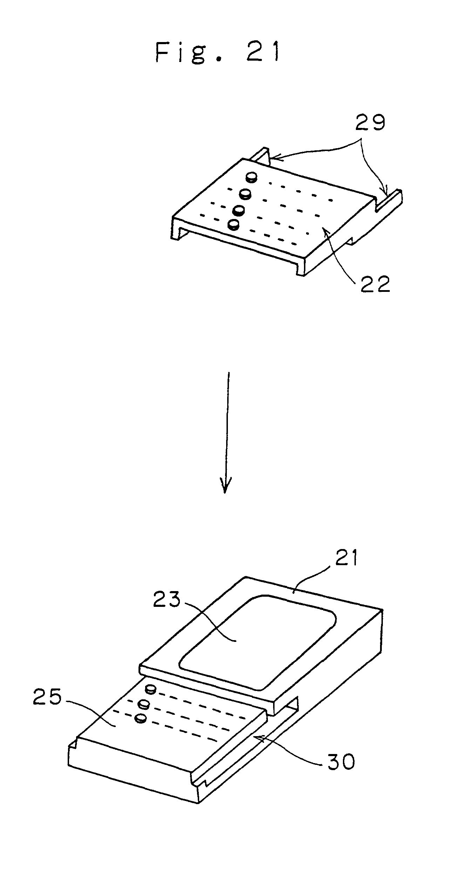

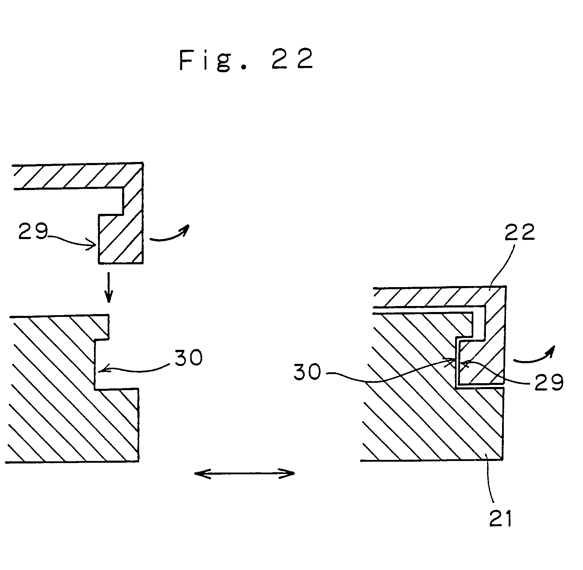

Figs. 21 and 22 show a practical construction of the electronic device of a seventh embodiment of the invention. Here, as in the third embodiment, the electronic device is provided with a main unit 21, a sliding keyboard 22 serving as the first input means, a liquid crystal display portion 23 fitted with a touch panel, and a stationary keyboard 25 serving as the second input means. Exchange of signals between the sliding keyboard 22 and the main unit 21 is achieved, as in the sixth embodiment, by the use of infrared communication units.

The sliding keyboard 22 can be physically detached from the main unit 21 by bending the downward extending side wall portions of the sliding keyboard 22 so that the projections 29 formed thereon disengage from the grooves 30 formed in the main unit 21. The sliding keyboard 22 can then be physically coupled back to the main unit 21 by bending the downward extending side wall portions so that the projections 29 engage with the grooves 30. Thus, it is also possible to couple and fit, instead of the sliding keyboard 22, a third input means having a shape similar thereto to the main unit 21. The third input means may be a keyboard of a different type from the sliding keyboard 22, or a tablet board. In either case, exchange of signals between the third input means and the main unit 21 is achieved by the use of infrared communication units.

Replacing the first input means with a third input means in this way helps expand the variety of input modes. The use of non-contact communication makes the interchanging of the input means easy, causing no problem at all in establishing connection between the input means and the main unit 21.

Also in the fourth embodiment shown in Figs. 9 to 14, exchange of signals between the sliding keyboard 22 and the main unit 21 is achieved by the use of the infrared communication units 26. Thus, even when the sliding keyboard 22 is placed in front of the stationary keyboard 25, the connection between the sliding keyboard 22 and the main unit 21 is maintained.

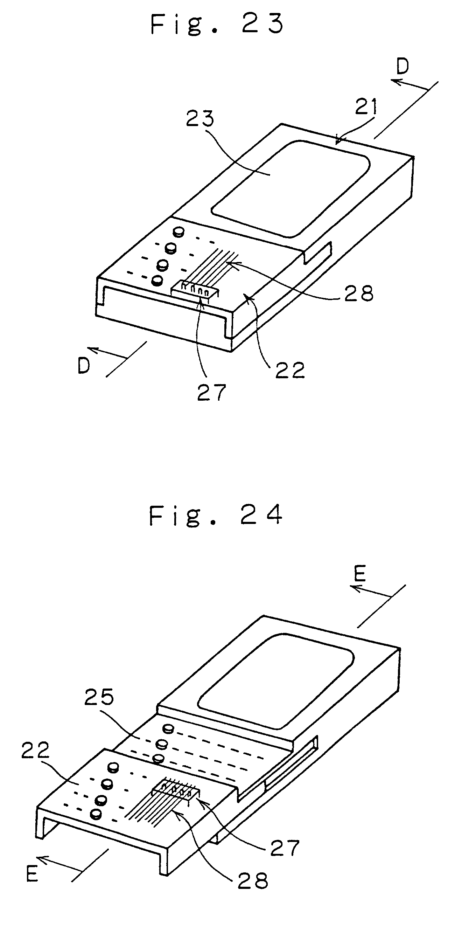

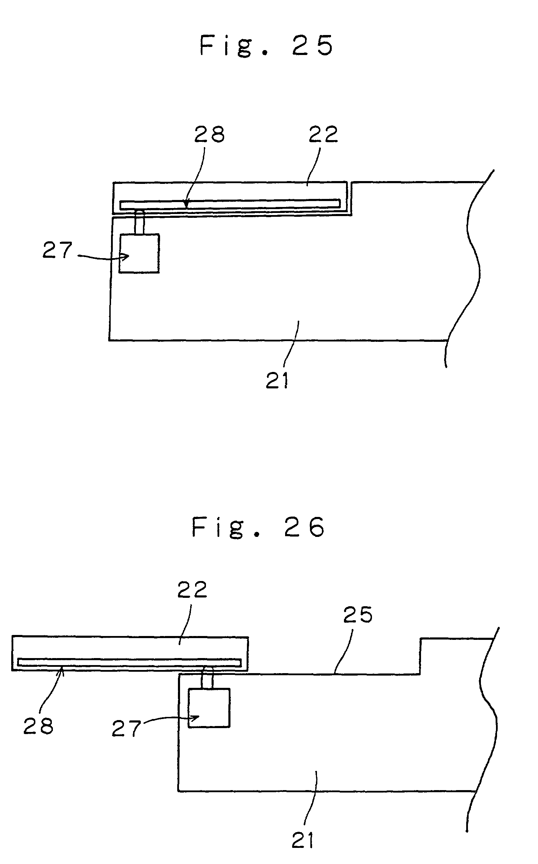

Figs. 23 to 26 show a practical construction of the electronic device of an eighth embodiment of the invention. Here, as in the third embodiment, the electronic device is provided with a main unit 21, a sliding keyboard 22 serving as the first input means, a liquid crystal display portion 23 fitted with a touch panel, and a stationary keyboard 25 serving as the second input means. In this embodiment, exchange of signals between the sliding keyboard 22 and the main unit 21 is achieved through physical contact. Specifically, on the top surface of the main unit 21 are provided connection terminals 27, and on the bottom surface of the sliding keyboard 22 are formed connection patterns 28 that make contact with the connection terminals 27. All over the sliding stroke of the sliding keyboard 22, the connection terminals 27 and the connection patterns 28 keep electrical contact with each other and thereby keep exchange of signals between the sliding keyboard 22 and the main unit 21 possible. The connection terminals 27 are preferably, but not necessarily, made of a resilient metal; that is, they may be made of any material as long as they provide electrical connection. In this eighth embodiment, the sliding keyboard 22, by using an IC incorporated therein, processes the data entered through key operation and feeds out signals via the connection terminals 27, of which there are four.

Also in this arrangement, the sliding keyboard 22 and the main unit 21 are connected together on a cordless basis, and therefore a construction similar to the one shown in Fig. 22 can be applied to them to make them detachable from each other. Thus, it is also possible to couple and fit, instead of the sliding keyboard 22, a third input means having a shape similar thereto to the main unit 21. The third input means may be a keyboard of a different type from the sliding keyboard 22, or a tablet board. In either case, exchange of signals between the third input means and the main unit 21 is achieved through physical contact between the connection terminals 27 and the connection patterns 28. In this way, it is possible to establish connection easily and securely not only between the sliding keyboard 22 and the main unit 21 but also between a third input means and the main unit 21, and thus it is easy to interchange the input means.

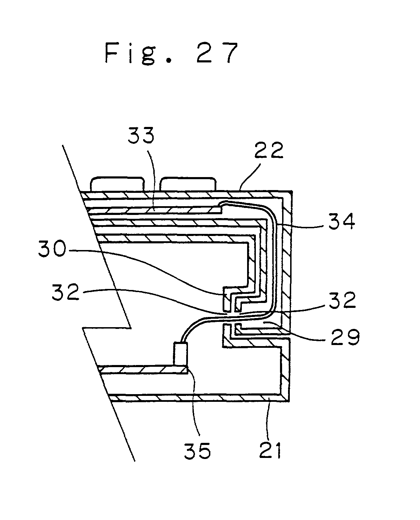

Fig. 27 shows a practical construction of the electronic device of a ninth embodiment of the invention. Here, exchange of signals between the main unit 21 and the sliding keyboard 22 is achieved by way of a cable. In the grooves 30 of the main unit 21 and in the projections 29 of the sliding keyboard 22, slits 32 are formed so as to face each other and extend along the sliding direction, and through these slits 32 runs a cable 34. One end of the cable 34 is connected to a control circuit board 33 provided inside the sliding keyboard 22, and the other end thereof is connected to a connector 35 provided inside the main unit 21. The cable 34 is detachable at the connector 35, and this makes it possible to remove the sliding keyboard 22 and replace it with a third input means.

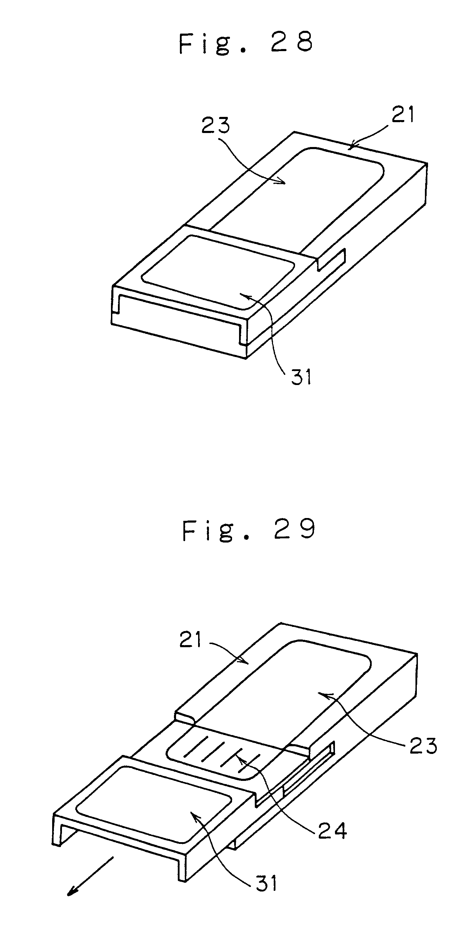

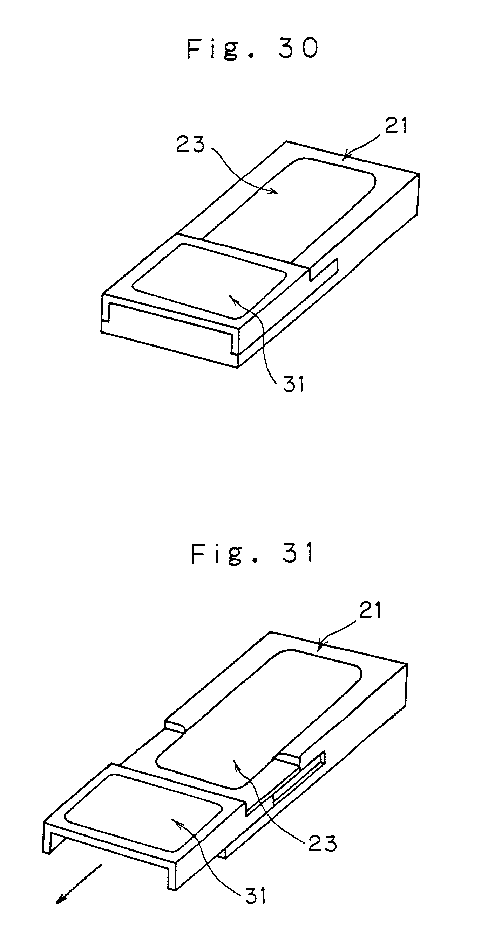

Figs. 28 and 29 show a practical construction of the electronic device of a tenth embodiment of the invention. The construction of this embodiment is the same as that of the first embodiment except that a sliding tablet board 31 is used as the first input means.

Figs. 30 and 31 show a practical construction of the electronic device of an eleventh embodiment of the invention. The construction of this embodiment is the same as that of the second embodiment except that a sliding tablet board 31 is used as the first input means.

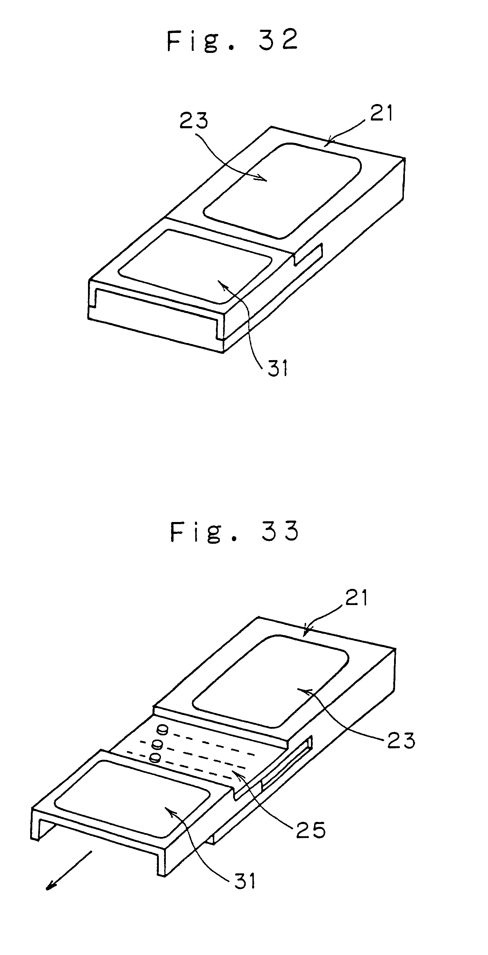

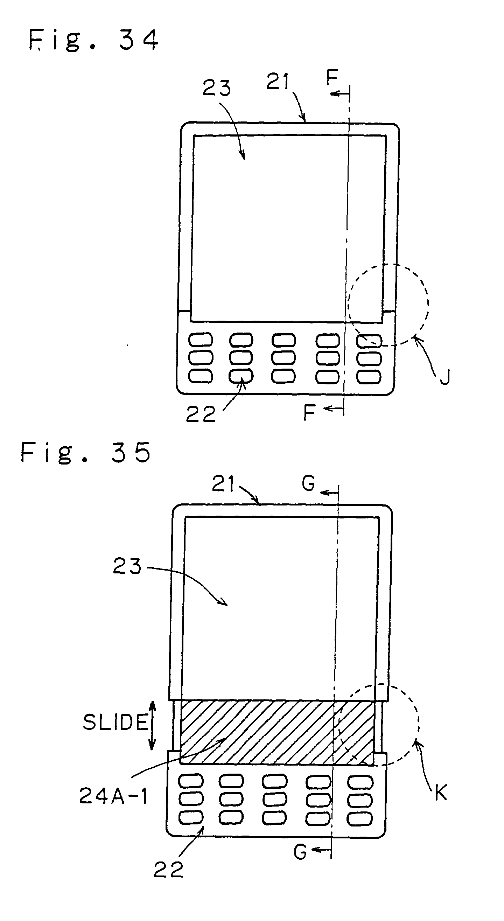

Figs. 32 and 33 show a practical construction of the electronic device of a twelfth embodiment of the invention. The construction of this embodiment is the same as that of the third embodiment except that a sliding tablet board 31 is used as the first input means.

In this way, in the tenth, eleventh, and twelfth embodiments, when the sliding tablet board 31 serving as the first input means is slid forward, the second input means (the tablet board, the touch panel of the liquid crystal display portion, or the stationary keyboard), which is arranged so as not to be movable relative to the main unit 21, is exposed and is thereby brought into a usable state. This makes entry of various and diverse types of data possible while keeping the electronic device compact, and also permits the user the choice of one of the input means available that best suits a given purpose. Moreover, these arrangements create extra space for the layout of the keys and thereby make it possible to design a user-friendly input device.

It is possible to split the sliding tablet board 31 at the center into a left and a right portion, like the sliding keyboard 22 in the fifth embodiment, so that, when these left and right portions are slid respectively leftward and rightward, the second input means is exposed.

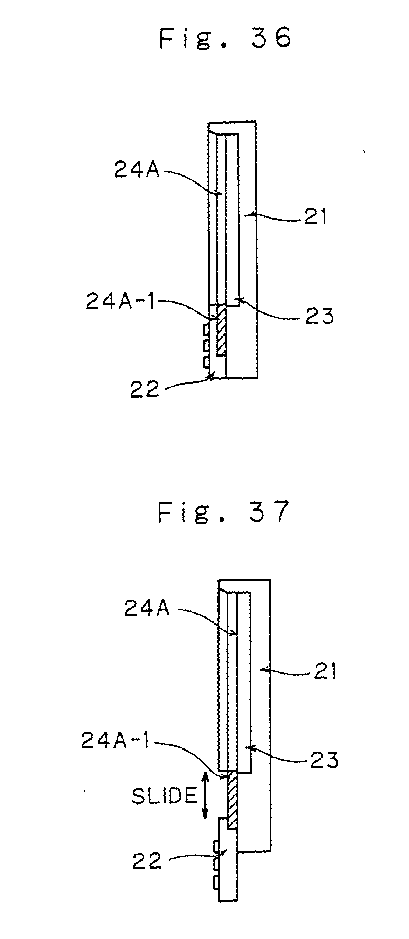

Figs. 34 to 39 show a practical construction of the electronic device of a thirteenth embodiment of the invention. In this embodiment, a sliding keyboard 22 is provided as the first input means. In Fig. 36, reference numeral 24A represents a tablet key input portion attached to a liquid crystal display portion 23. The tablet key input portion 24A is composed of a transparent touch panel, and accepts clicking and hand-writing operations performed against the operation buttons and character input pads displayed, as needs arise, on the liquid crystal display portion 23. When the sliding keyboard 22 is in a first position, part 24A-1 of the tablet key input portion 24A (hereinafter, this part will be referred to simply as the "tablet key input portion 24A-1") is covered by the sliding keyboard 22. Although the tablet key input portion 24A-1 is part of the tablet key input portion 24A, it has a fixed pattern of operation buttons, character pads, and the like displayed thereon so as to be used to enter regularly entered contents.

While the sliding keyboard 22 is in the first position as shown in Fig. 34, the tablet key input portion 24A-1 cannot be used, but the main unit 21 is in a compact state, and is thus convenient to be carried around. When the sliding keyboard 22 is slid forward to a second position as shown in Fig. 35, the tablet key input portion 24A-1 is exposed so as to be ready for use. In this state, a larger input operation area enhances ease of operation and offers a variety of input modes, just as in the other embodiments described earlier.

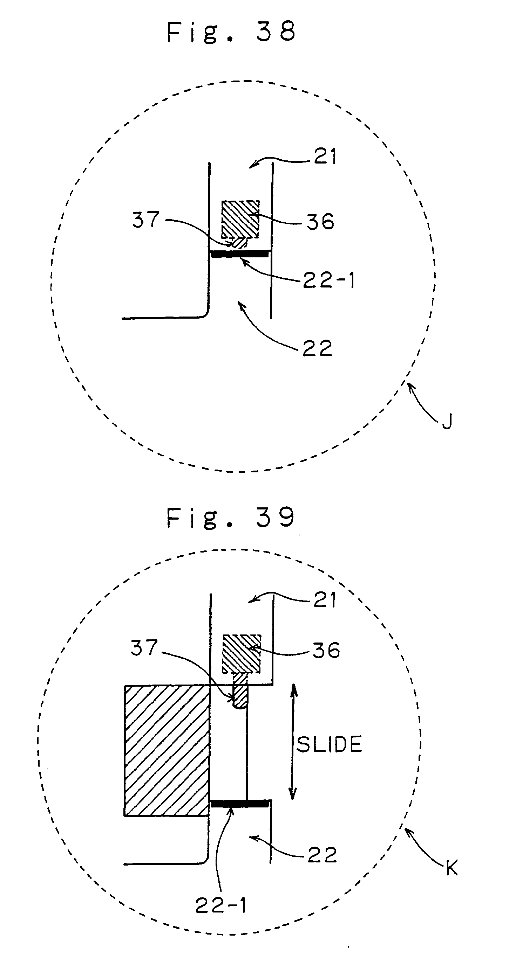

The main unit 21 is provided with a checking means for checking whether the sliding keyboard 22 is in the first or second position. The checking means is realized with a switch 36 shown in Fig. 38. The switch 36 is fitted inside the main unit 21 with an actuator 37 protruding toward the sliding keyboard 22. When the sliding keyboard 22 is in the first position, it pushes, with a pressing surface 22-1 formed thereon, the actuator 37 in, and thereby turns the switch 36 on. When the sliding keyboard 22 is slid to the second position as shown in Fig. 39, the pressing surface 22-1 moves away from the actuator 37, and thus the actuator 37 is brought back to its protruding position by a spring provided inside the switch 36, turning the switch 36 off. By monitoring this switch 36, which is turned on/off in this way, it is possible to check whether the sliding keyboard 22 is in the first or second position.

The checking means may be realized with, instead of a switch 36 having a linearly moving actuator 37 as shown in Fig. 38, a switch of any other type. Moreover, the switch may be fitted in any other position than is specifically shown in Fig. 38.

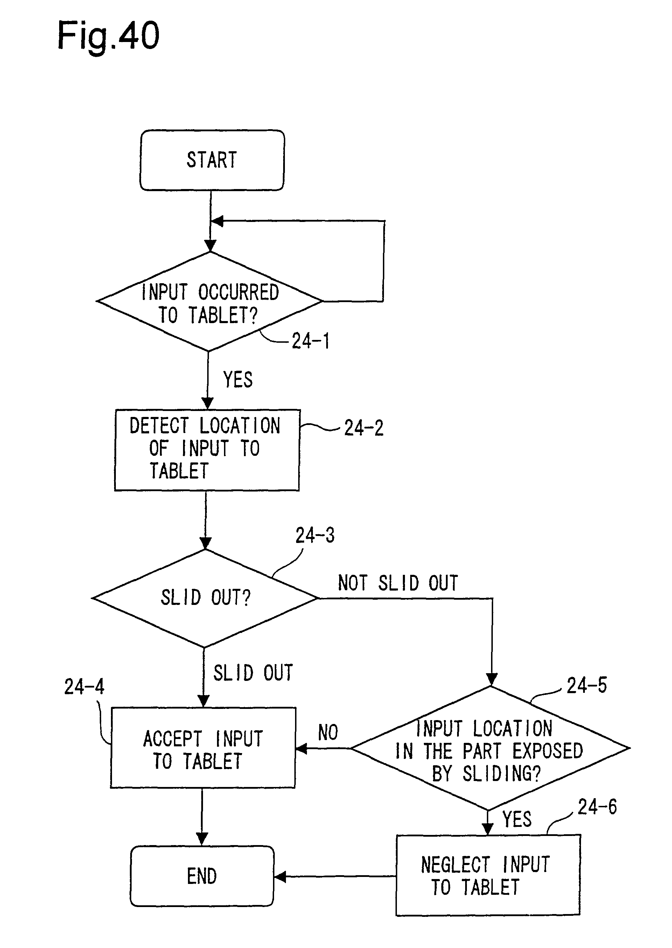

How the checking means operates is shown in a flow chart in Fig. 40. In step 24-1, whether there is input to the tablet key input portion 24A or not is checked. The main unit 21 is performing this checking all the time. As long as there is no input to the tablet key input portion 24A, the flow does not proceed to the next step. When there is input to the tablet key input portion 24A, then the location of the input is detected in step 24-2. After the detection of the input location, the slide position of the sliding keyboard 22 is checked in step 24-3. If the sliding keyboard 22 is in the second position, the switch 36 is off, and thus the sliding keyboard 22 is found to be slid out. In this case, the tablet key input portion 24A-1, which is covered by the sliding keyboard 22 otherwise, is exposed, and is in a state in which it accepts input. Thus, in step 24-4, the input to the tablet key input portion 24A is accepted. Here, input to the other part of the tablet key input portion 24A than the tablet key input portion 24A-1 is also accepted.

If, in step 24-3, the sliding keyboard 22 is in the first position, the switch 36 is on, and thus the sliding keyboard 22 is found not to be slid out, and the tablet key input portion 24A-1 is in a state in which it neglects input. In this case, the flow proceeds to step 24-5, where whether or not the location of the input lies within the input area of the tablet key input portion 24A-1 hidden by the sliding keyboard 22 is checked.

The reason that this operation is performed in step 24-5 is as follows. Normally, when the sliding keyboard 22 is in the first position, the tablet key input portion 24A-1 is in a state in which it neglects input, and therefore there never occurs input to the tablet key input portion 24A-1. However, if a strong mechanical force is applied to the sliding keyboard 22, it may warp in such a way as to press the tablet key input portion 24A-1 so that input is erroneously recognized to have occurred to the tablet key input portion 24A-1. This leads to unnecessary data processing.

To prevent this, if input occurs to the tablet key input portion 24A-1 when the sliding keyboard 22 is not slid out, i.e. in a situation where input to the tablet key input portion 24A-1 is impossible, the input is judged to have been recognized erroneously, and the flow proceeds to step 24-6, where the input to the tablet key input portion 24A-1 is neglected. If the location of the input is found to lie in the other part of the tablet key input portion 24A than the tablet key input portion 24A-1, the flow proceeds to step 24-4, where the input to the tablet key input portion 24A is accepted.

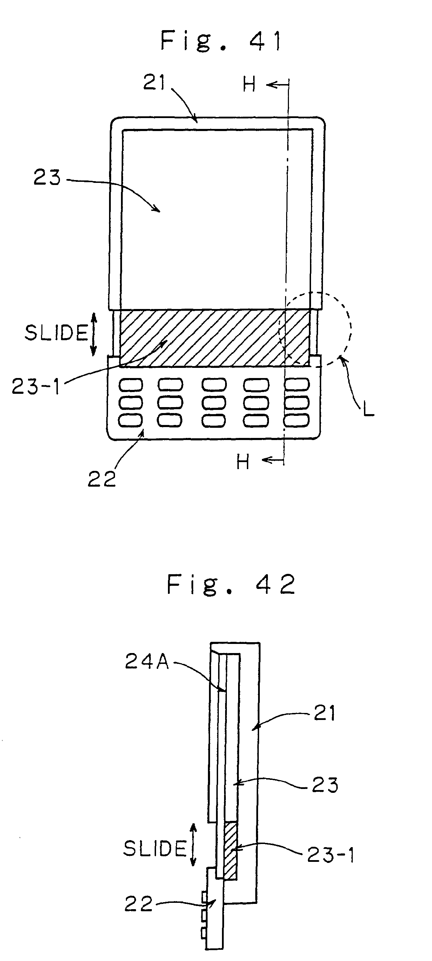

Figs. 41 and 42 show a practical construction of the electronic device of a fourteenth embodiment of the invention. In this embodiment, a sliding keyboard 22 is provided as the first input means. As in the second embodiment, a large-size liquid crystal display portion 23 is used, and it has an extension portion 23-1. The extension portion 23-1 is hidden by the sliding keyboard 22 when the sliding keyboard 22 is in a first position, and appears when the sliding keyboard 22 is slid to a second position.

Although the user cannot see the extension portion 23-1 of the liquid crystal display portion 23 as long as the sliding keyboard 22 is in the first position, this construction helps make the main unit 21 compact and convenient to be carried around. When the sliding keyboard 22 is slid forward to the second position as shown in Figs. 41 and 42, the extension portion 23-1 is exposed, and the screen area of the liquid crystal display portion 23 becomes larger. This enhances the viewability and display performance of the screen. A switch like the switch 36 used in the thirteenth embodiment may be fitted in the position marked L in Fig. 41 so that the display screen of the liquid crystal display portion 23 is switched according to the result of detection of the slide state of the sliding keyboard 22.

With respect to the display on the liquid crystal display portion 23, it is possible to reduce power consumption by turning off the display on the extension portion 23-1 when the sliding keyboard 22 is in the first position. This is effective in delaying the depletion of the battery, considering that, the larger the screen of a liquid crystal display device, the higher its power consumption. Power consumption depends also on how the display on the screen changes; specifically, the more frequent the switching of the display signals, the higher the resulting power consumption. Therefore, it is possible to reduce power consumption also by stopping the switching of the display signals, i.e. by displaying a solid black or white pattern on the extension portion 23-1. Furthermore, a tablet key input portion 24A may be fitted to the liquid crystal display portion 23 and controlled through the flow of operations shown in Fig. 40 so that input and display are controlled concurrently.

In the foregoing descriptions, the first input means is described as interchangeable with a third input means. However, the first input means may be interchangeable with a component of any other type than an input means which is offered optionally.

## Claims

1. An electronic device of which a main unit (21) is provided with a data processing function and with input means, **characterized in that**
first input means (22) and second input means (24, 25) are arranged in the main unit (21),
the first input means being coupled to the main unit so as to be movable relative thereto between a first position in which the first input means overlaps with the main unit and a second position in which the first input means protrudes from the main unit, the first input means permitting input operation in both of the first and second positions,
the second input means being arranged in the main unit so as not to be movable relative thereto in such a way that the second input means is hidden by the first input means when the first input means is in the first position and the second input means is exposed when the first input means is in the second position, the second input means permitting input operation when the second input means is exposed, and
the first input means is interchangeable with third input means.

2. An electronic device as claimed in claim 1, **characterized in that** the first input means slides between the first and second positions, and that the first input means is assigned comparatively frequently used input functions, whereas the second input means is assigned comparatively infrequently used input functions.

3. An electronic device as claimed in claim 1, **characterized in that** exchange of signals between the first input means and the main unit is achieved through non-contact communication therebetween.

4. An electronic device as claimed in claim 1, **characterized in that** exchange of signals between the first input means and the main unit is achieved through physical contact therebetween.

5. An electronic device as claimed in claim 1, **characterized in that** the main unit further comprises checking means for checking whether the first input means is in the first or second position so as to switch an operation mode of the second input means according to a checking result of the checking means.
